Europäisches Patentamt

European Patent Office

Office européen des brevets

(11) Veröffentlichungsnummer: **0 240 694**

**A2**

(12) # EUROPÄISCHE PATENTANMELDUNG

(21) Anmeldenummer: **87102775.1**

(51) Int. Cl.⁴: **B65B 9/20** , **B65B 39/00**

(22) Anmeldetag: **26.02.87**

(30) Priorität: **11.04.86 DE 3612197**

(43) Veröffentlichungstag der Anmeldung:
**14.10.87 Patentblatt 87/42**

(84) Benannte Vertragsstaaten:
**CH DE FR GB IT LI SE**

(71) Anmelder: **ROBERT BOSCH GMBH**
**Postfach 50**
**D-7000 Stuttgart 1(DE)**

(72) Erfinder: **Roovers, Gijsbertus Cornelius F.**
**Dr. Poelstraat 17**
**NL-6006 2D Weert(NL)**
Erfinder: **van Berchum, Piet**
**Peperstraat 82**
**NL-5554 EL Valkenswaard(NL)**

(54) **Vorrichtung zum Herstellen von mit Flüssigkeit gefüllten Beutelpackungen.**

(57) Eine Vorrichtung zum Herstellen von mit Flüssigkeit gefüllten Beutelpackungen hat einen Schlauchformer (10) zum Formen eines Schlauches (2) aus einem Packstoffstreifen (1). Zum Einbringen von Flüssigkeitsmengen in das Ende des Schlauches (2) erstreckt sich in diesem Füllrohr (40) dessen Auslaßende ein Dosierventil (41) trägt. Zum Zuleiten der Flüssigkeit in das Füllrohr hat dieses an seinem in Höhe der Eintrittsöffnung des Schlauchformers (10) liegenden Ende einen quer verlaufenden Zuführstutzen (46), dessen Stirnseite mit einer flexiblen Membran (52) verschlossen ist. Zum Betätigen des Ventils (41) ist eine im Füllrohr sich erstreckende Stange in Höhe des Zuführstutzens gelenkig mit einem Hebel (50) verbunden, der an einen Stellzylinder (51) angelenkt ist. Zum Verschwenken des Hebels (50) hat dieser zwei Querarme (56, 57), die an Lenkern (58, 59) angelehnt sind, deren Längsachsen einander in der Mitte der Membran (52) schneiden.

FIG. 1

EP 0 240 694 A2

## Vorrichtung zum Herstellen von mit Flüssigkeit gefüllten Beutelpackungen

Stand der Technik

Die Erfindung geht aus von einer Vorrichtung zum Herstellen von mit Flüssigkeit gefüllten Beutelpackungen nach der Gattung des Anspruchs 1. Bei einer beispielsweise aus der DE-A-2 355 957 bekannten Vorrichtung dieser Art ist der Füllstutzen oberhalb des Schlauchformers mit dem Füllrohr verbunden, das weit über den Schlauchformer vorragt, und die Betätigungsstange für das Dosierventil ist mit einem Stellzylinder am oberen Ende des Füllrohrs verbunden.

Vorteile der Erfindung

Die erfindungsgemäße Vorrichtung mit den kennzeichnenden Merkmalen des Anspruchs 1 hat den Vorteil, daß durch die Füllgutzuleitung und die Ventilbetätigung im Bereich der Eintrittsöffnung des Kragens Platz für andere Einrichtungen zum Einwirken auf den Packstoff und/oder das Füllgut oberhalb des Schlauchformers zur Verfügung steht, wie beispielsweise eine Einrichtung zum Befestigen von Entnahmestutzen für das Füllgut an den Beutelpackungen.

Durch die in den Uteransprüchen aufgeführten Maßnahmen sind vorteilhafte Weiterbildungen und Verbesserungen der im Anspruch 1 angegebenen Vorrichtung möglich. Besonders vorteilhaft ist die Maßnahme nach Anspruch 3, mit der eine Wanddurchführung des Betätigungshebels mit dessen Drehachse in der Wand jedoch ohne Verwendung eines Lagers und eines Achszapfens möglich ist, so das Dichtigkeitsprobleme an dieser Stelle entfallen. Ferner wird durch die sich ein-und auswölbende Membran ein Übertragen von Turbulenzen auf das Füllgut vermieden. Außerdem wird die Membran nur geringfügig beansprucht, so daß deren Haltbarkeit sehr lang ist.

Zeichnung

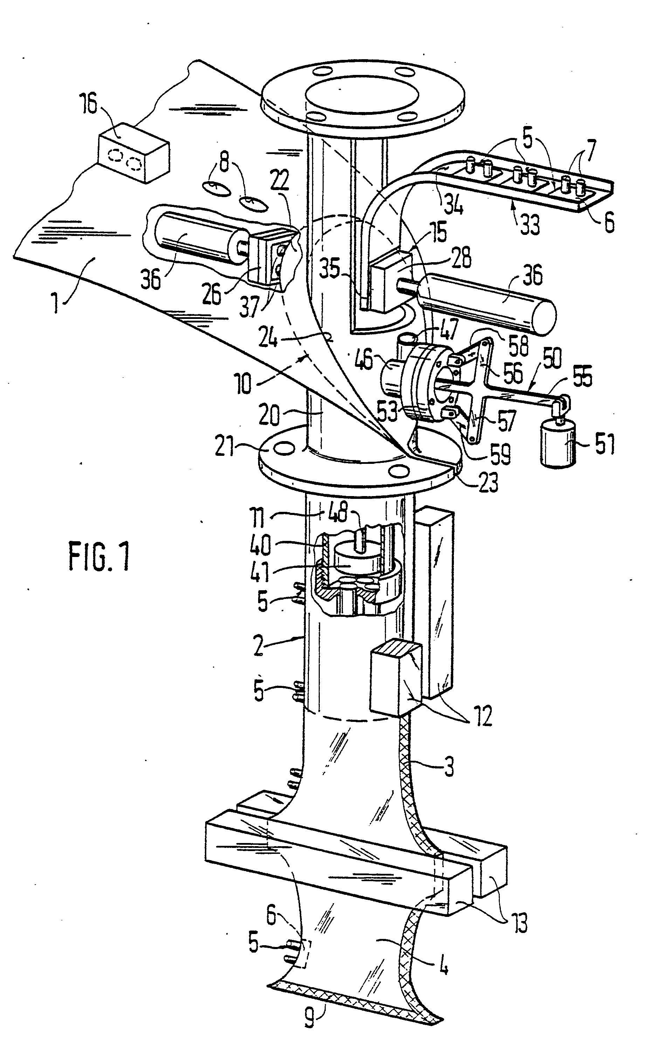

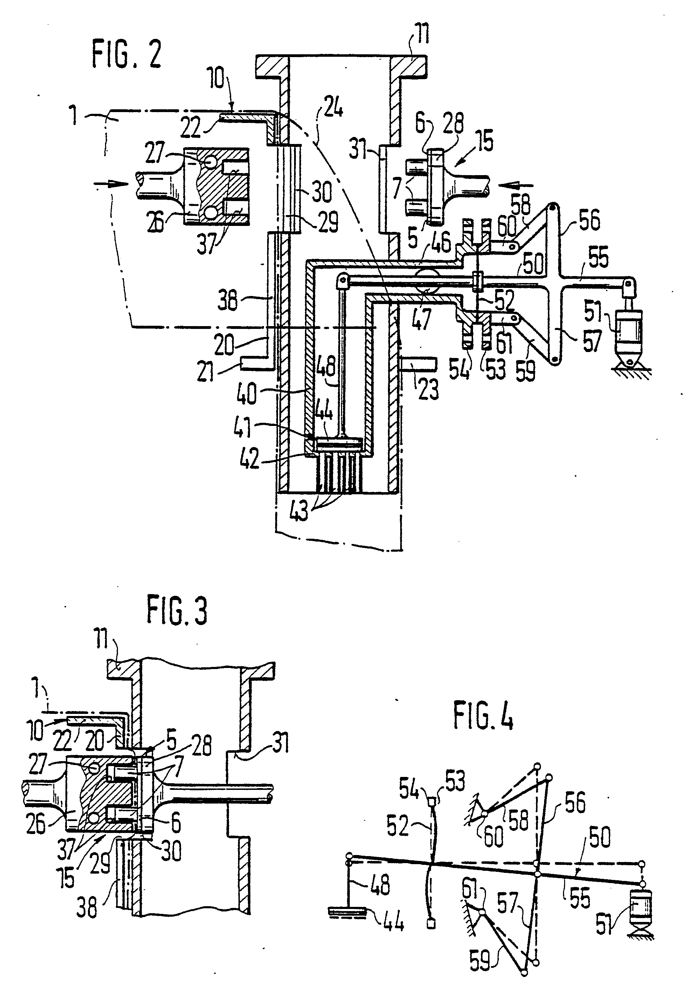

Ein Ausführungsbeispiel der Erfindung ist in der Zeichnung dargestellt und in der nachfolgenden Beschreibung näher erläutert. Es zeigen Figur 1 eine Vorrichtung zum Formen, Füllen und Verschließen von Schlauchbeutelpackungen mit Entnahmestutzen in schaubildlicher Darstellung, Figur 2 die Form-und Fülleinrichtung der Vorrichtung nach Figur 1 im Querschnitt, Figur 3 einen Teil der Einrichtung nach Figur 2 im Querschnitt in einer zweiten Arbeitsstellung und Figur 4 den Betätigungsmechanismus der Fülleinrichtung in vereinfachter Darstellung.

Beschreibung des Ausführungsbeispiels

Eine von einer nicht dargestellten Vorratsrolle ablaufende, zumindest einseitig heißsiegelfähig beschichtete Packstoffbahn 1 wird über eine Formschulter 10 geführt, welche sie um ein Formrohr 11 zu einem Schlauch 2 formt. Ein Längsnahtsiegelbackenpaar 12 verschweißt die beiden den Innenseite gegen Innenseite gelegten Längsränder der Packstoffbahn 1 zu einer Längsnaht 3. Ein taktweise auf-und abbewegtes Quernahtsiegelbackenpaar 13 teilt den Schlauch 2 nach Einfüllen jeweils einer Füllmenge in einzelne Beutelpackungen 4 ab und zieht den Schlauch 2 um jeweils eine Beutellänge nach unten ab. Im Bereich der Formschulter 10 ist eine Befestigungseinrichtung 15 angeordnet, die beim Stillstand der Packstoffbahn 1 jeweils einen Entnahmestutzen 5 durch Heißsiegeln an der Packstoffbahn 1 befestigt. Die beispielsweise dargestellten Entnahmestutzen 5 haben an einem Flansch 6 je zwei abstehende Röhrchen 7. Die aus einem thermoplastischen Kunststoff geformten Entnahmestutzen 5 werden mit ihrem Flansch 6 auf der Innenseite der Packstoffbahn anliegend mit dieser verschweißt, wobei ihre beiden Röhrchen 7 durch Löcher 8 in der Packstoffbahn 1 ragen, die von einer Stanzeinrichtung 16 vor der Formschulter 10 in die Packstoffbahn 1 eingestanzt worden sind.

Die Formschulter 10 besteht aus einem das Formrohr 11 mit engem Spalt umgebenden Führungs-oder Rohrstutzen 20 mit einem Befestigangsflansch 21 und aus einem die obere Einlauföffnung umgebenden Kragen 22, über den und dessen mit der Innenseite des Rohrstutzens 20 gemeinsamer Umlenkkante 24 die Packstoffbahn 1 beim Formen des Schlauches 2 läuft. Die obere Eintrittsöffnung des Rohrstutzens 20 verläuft zur Längsachse geneigt, so daß der Kragen 22 in Laufrichtung der Packstoffbahn 1 von seinem Scheitel auf der Zulaufseite der Packstoffbahn zur anderen Seite hin abfällt. An der niederen Stelle des Kragens 22, an der die beiden Längsränder der Packstoffbahn 1 Innenseite gegen Innenseite aufeinander gelegt werden, haben der Rohrstutzen 20 und der Flansch 21 einen Spalt 23, durch den beim Vorziehen der Packstoffbahn 1 bzw. des Schlauches 2 die abstehenden Längsränder laufen.

Die Befestigungseinrichtung 15, die einen Siegelstempel 26 mit einer Heizeinrichtung 27 und einen als Gegenstempel ausgebildeten Träger 28 für die Entnahmestutzen 5 aufweist, ist im oberen Bereich der Formschulter 10 angeordnet, wobei ihre gemeinsame Wirkfläche unterhalb des Scheitels des Kragens 22 liegt (Figur 3). Der Siegelstempel 26 ist dabei auf der Zulaufseite der Packstoffbahn 1 und der Träger 28 auf der Seite der Eintrittsöffnung der Formschulter 10 quer zu deren Längsachse verschiebbar angeordnet. Zum Erreichen der Packstaffbahn 1 in der Wirkstellung sind im Rohrstutzen 20 und im Formrohr 11 miteinander ausgerichtete, der Form des Siegelstempels 26 und des Trägers 28 sowie deren Bewegungsbahnen angepaßte Ausnehmungen 29, 30, 31 vorgesehen. Zum Zuführen der Entnahmestutzen 5 in den Arbeitsbereich der Befestigungseinrichtung 15, insbesondere vor deren Träger 28, ist oberhalb der Befestigungseinrichtung 15 eine Zuführeinrichtung 33 mit einer Führungsrinne 34 angeordnet, deren Ende 35 zwischen dem Formrohr 11 und der Stirnseite des Träger 28 in seiner zurückgezogenen Stellung liegt (Figur 1). Zum Hin-und Herbewegen des Siegelstempels 26 und des Trägers 28 zwischen einer Ausgangsstellung, in der die beiden voneinander entfernt sind, und einer Wirkstellung, in der die beiden gegeneinander gepreßt sind (Figur 3), sind der Siegelstempel 26 und der Träger 28 mit je einem hydraulischen oder pneumatischen Betätigungszylinder 36 verbunden. Zum Befestigen eines Entnahmestutzens 5 werden der Siegelstempel 26 und der Träger 28 gegeneinander bewegt, wobei der Träger 28 am Ende 35 der Zuführrinne 34 einen bereitgestellten Entnahmestutzen 5 übernimmt und diesen gegen die Packstoffbahn 1 transportiert, wobei die beiden Röhrchen 7 des Entnahmestutzens 5 die Löcher 8 der positionierten Packstoffbahn 1 durchstoßen und schließlich der Flansch 6 an der Innenseite der Packstoffbahn 1 zur Anlage kommt, so daß bei ebenfalls zugestelltem Siegelstempel 26 der Flansch 6 des Entnahmestutzens 5 mit der Packstoffbahn 1 verpreßt und durch Übertragen von Wärme seitens des Siegelstempels 26 mit dieser versiegelt wird (Figur 3). Nach einer gewissen Preßdauer werden der Träger 28 und der Siegelstempel 26 wieder aus der Wirkstellung in ihre Ausgangsstellung zurückgezogen. Zum Aufnehmen der Röhrchen 7 des Stutzens 5 während des Siegelns hat der Siegelstempel 26 zwei entsprechend angeordnete Sackbohrungen 37 in seiner Stirnseite. Zum Halten eines Entnahmestutzens 5 während des Überführens sind in der Stirnseite des Trägers 28 nicht dargestellte Saugbohrungen angeordnet; es können aber auch in der Stirnseite Stifte eingesetzt sein, die in die Röhrchen 7 des Stutzens eingreifen.

Das Ansiegeln eines Entnahmestutzens 5 an die Packstoffbahn 1 erfolgt während des Stillstands der Packstoffbahn, während dessen auch die Längsnaht 3 vom Längsnahtsiegelbackenpaar 12 gebildet wird, und das Quernahtsiegelbackenpaar 13 von einer unteren Stellung in eine obere Ausgangsstellung zurückkehrt. Nach dem Schließen des Quernaht-siegelbackenpaares 13 wird dieses nach unten bewegt, so daß es den Schlauch 2 und die Packstoffbahn 1 um eine Beutellänge vorzieht, wo-bei die vom Schlauch 2 nach außen abstehenden Röhrchen 7 des Entnah-mestutzens durch einen Längsschlitz 38 im Rohrstutzen 20 der Form--schulter 10 unterhalb der Ausnehmung 29 gezogen werden und wobei das Quernahtsiegelbackenpaar 13 eine Beutelpackung 4 durch Anbringen von Quernähten 9 vom Schlauch 2 abteilt.

Zum Einfüllen jeweils einer Menge eines flüssigen Füllguts in die Beutelpackungen 4 ist im Formrohr 11 ein Füllrohr 40 gleichachsig angeordnet, an dessen unterem Ende ein Dosierventil 41 angeordnet ist. Dieses Dosierventil 41 weist eine Ventilsitzplatte 42 mit mehreren nach unten sich erstreckenden Auslaßröhrchen 43 sowie eine im Füllrohr 40 gegen die Ventilsitzplatte 42 bewegbare Ventilplatte 44 auf. Das obere Ende des Füllrohrs 40 liegt wenig unterhalb des Arbeitsbereichs der Befestigungseinrichtung 15 und ist dort mit einem das Formrohr 11 quer durchsetzenden Zuführstutzen 46 verbunden. In diesen Zuführstutzen 46 mündet wiederum quer eine Fülleitung 47, durch die das abzufüllende flüssige Gut zugeführt wird.

Zum Dosieren der einzelnen Füllgutmengen wird die Ventilplatte 44 zeitweise von der Ventilsitzplatte 42 abgehoben. Dazu ist die Ventilplatte 44 an einer Stange 48 befestigt, die sich im Füllrohr 40 bis zur Höhe des Zuführstutzens 46 erstreckt und deren oberes Ende an einem Ende eines Hebels 50 angelenkt ist. Zum Betätigen des Hebels 50 ist an dessen anderem Ende ein Stellzylinder 51 angelenkt. Die dem Füllrohr 40 gegenüberliegende Öffnung des Zuführstutzens 46 ist mit einer biegsamen Wand in Form einer Membran 52 verschlossen, die mit einem Ringflansch 53 mit einem Flansch 54 am Ende des Zuführstutzens 46 verspannt ist. In ihrer Mitte ist die Mebran 52 ebenfalls dicht mit dem Hebel 50 verbunden. Zum Schwenken des Hebels 50 um eine Achse, die durch die Mitte der Membran 52 verläuft, hat der Hebel 50 an seinem sich außerhalb des Zuführstutzens 46 erstrekkenden Arm 55 zwei Querarme 56, 57. Die Enden der Querarme 56, 57 sind an Lenkern 58, 59 angelenkt, die in ortsfesten Lagern 60, 61 am Ringflansch 53 gelagert sind. In einer Stellung, und zwar in der Schließstellung des Dosierventils 41 nehmen die beiden Lenker 58, 59 eine Lage ein, in der ihre verlängerten Längsachsen einander im Mittelpunkt der Membran 52 schneiden (Figur 2). Durch eine Stellbewegung des Stellzylinders 51 wird der Hebel 50 im Uhrzeigersinn verschwenkt, wobei durch die beschriebene Anordnung der Lenker 58, 59 der Hebel 50 um eine durch die Mitte der Membran 52 gehende Achse geschwenkt wird und wobei die Ventilplatte 44 von der Ventilsitzplatte 42 abgehoben wird. Zum Einfüllen jeweils einer Flüssigkeitsmenge in das Ende des Schlauches 2 wird die Ventilplatte 44 von der Ventilsitzplatte 42 jeweils während des Vorziehens des Schlauches 2 gehoben, so daß die Flüssigkeit aus dem Füllrohr 40 und durch die Auslaßröhrchen 43 in das abgeklemmte Ende des Schlauches 2 einströmen kann.

Ergänzend wird darauf hingewiesen, daß mit der oben beschriebenen Befestigungseinrichtung bei entsprechender Anpassung des Trägers und des Stempels auch anders geformte Entnahmestutzen am Schlauch bzw. den geformten Beutelpackungen angebracht werden können.

## Ansprüche

1. Vorrichtung zum Herstellen von mit Flüssigkeit gefüllten Beutelpackungen (4) aus einem Packstoffstreifen (1) mit einem den Packstoffstreifen zu einem Schlauch (2) umformenden Schlauchformer (10), der eine schräge Eintrittsöffnung hat, mit einem zum Schlauchformer gleichachsigen Füllrohr (40), das vom Schlauch umgeben ist und in das ein quer verlaufender Zuführstutzen (46) mündet, und mit einem Dosierventil (41) am Ende des Füllrohrs, das von einer Stelleinrichtung (51) über eine das Füllrohr durchsetzende Stange (48) betätigt wird, dadurch gekennzeichnet, daß der Zuführstutzen (46) im Bereich der Eintrittsöffnung des Schlauchformers (10) in das Füllrohr (40) mündet, daß die Stange (48) an einem den Zuführstutzen durchsetzenden Hebel (50) angelenkt ist, und daß die Drehachse des Hebels in einer stirnseitigen Begrenzungswand (52) des Zuführstutzens liegt.

2. Vorrichtung nach Anspruch 1, dadurch gekennzeichnet, daß die Begrenzungswand aus einer flexiblen Membran (52) besteht.

3. Vorrichtung nach Anspruch 2, dadurch gekennzeichent, daß der Hebel (50) an seinem außerhalb des Zuführstutzens (46) sich erstrekkenden und mit der Stelleinrichtung (51) verbundenden Arm (55) zwei Querarme (56, 57) hat, die mit je einem am Zuführstutzen gelagerten Lenker (58, 59) gelenkig verbunden sind, wobei die Lenker derart ausgerichtet sind, daß ihre gedachten Längsachsen einander im Bereich der Membran (52) schneiden.

4. Vorrichtung nach Anspruch 3, dadurch gekennzeichnet, daß die Längsachsen der Lenker (58, 59) in der Mitte der Fläche der Membran (52) einander schneiden.

FIG.1

FIG. 2

FIG. 3

FIG. 4